# EUROPEAN PATENT SPECIFICATION

(11) **EP 0 420 305 B1**
(45) Date of publication and mention of the grant of the patent: **01.12.1993**
(21) Application number: 90124356.8
(22) Date of filing: 02.09.1987
(51) Int. Cl.: G01B 7/00

(54) **Signal processing for contact-sensing probe**
Signalverarbeitung für Berührungstastkopf
Traitement de signal pour sonde palpeur de contact

(30) Priority: 03.09.1986 GB 8621243; 24.12.1986 GB 8630836
(43) Date of publication of application: 03.04.1991
(62) Divisional of application: 87905470.8
(73) Proprietor: Renishaw plc, Wotton-Under-Edge Gloucestershire GL12 8JR (GB)
(72) Inventor: Lloyd, Peter George, Bristol, Avon (GB)
(74) Representative: Jackson, John Timothy

(56) References cited:
- EP-A- 0 204 926
- DE-A- 2 551 361
- DE-A- 2 820 813
- FR-A- 2 321 681
- FR-A- 2 430 622
- US-A- 4 153 998
- US-A- 4 502 014

## Description

This invention relates to probes for sensing the position of a workpiece, e.g. by contact, for use in apparatus such as co-ordinate measuring machines and machine tools, for measuring the dimensions of work-pieces. More particularly, it relates to circuits for processing and conditioning the signals received from such probes.

Our International Patent Application WO-A-86/03829 describes a probe having a stylus for contacting the workpiece. The probe is fitted in apparatus which causes relative movement of the probe and workpiece, and the probe contains means for sensing when such contact is made. The sensing means is a piezoelectric sensor, which detects a sharp acceleration or shock transmitted into the stylus on its initial contact with the workpiece, and gives a practically instantaneous indication of this contact. The application also suggests another sensing means, relying on a conventional electrical connection to seat elements between a movable member to which the stylus is connected, and a fixed member or housing. The seat elements form a kinematic support for the movable member on the fixed member, and may comprise a cylinder seating on a pair of balls at each of three locations spaced around the axis of the stylus. The purpose of this electrical connection is to indicate seating and reseating of the movable member.

Our co-pending European Patent Application EP-A-0242710, which claims a common priority with the present application and also has an earlier priority claim, shows details of electrical arrangements in such a probe. It also points out that the connection to the seat elements provides a useful back-up signal to indicate contact with the workpiece if the piezo-electric sensor fails to provide a signal on initial contact (e.g. if the contact is made at a very low speed). This back-up signal provides a (less accurate) measurement indication, and also serves to stop the apparatus to prevent collision damage between the workpiece and the probe.

In EP-A-0242710, the two signals from the two sensing means are combined to give a single trigger signal, which is taken to the apparatus to indicate that contact has occurred. The apparatus therefore only has to deal with one trigger signal, as with a conventional probe. To give maximum interchangeability between conventional probes and such probes with two sensing means, the above co-pending application describes circuits for combining the two signals within the probe itself, prior to transmission to an external interface unit which interfaces the probe to the apparatus. However, it would of course be possible to combine the signals in the interface unit if maximum interchangeability is not essential.

However, whilst it is advantageous to provide the apparatus with a single combined trigger signal in the above manner, the apparatus has no way of knowing whether the trigger signal resulted from the accurate sensing of the initial contact provided by the piezo-electric sensor, or from the less accurate switching sensor.

The present invention, at least in one aspect, provides a circuit for processing a trigger signal from a workpiece position-sensing probe having first and second sensing means for producing said trigger signal, the circuit comprising:
first detecting means for detecting a signal produced by the first sensing means, giving a first detection signal;
second detecting means for detecting a signal produced by the second sensing means, giving a second detection signal;
means for producing at least one output trigger signal in response to said detection signals; and
means for discriminating the first to occur of said first and second detection signals, and providing a further output accordingly, comprising means for discriminating a time delay between the detection signals.

Provision of the further output to the apparatus enables the apparatus to take corrective action if the more accurate sensor fails to provide the initial contact signal, e.g. by repeating the measurement.

The discriminating means may act by discriminating a time delay between the detection signals.

Examples of the invention will be described with reference to the accompanying drawings, in which:
Fig 1 is a schematic diagram of one signal processing circuit connected to a probe,
Fig 2 shows a modification of part of Fig 1, and
Fig 3 shows the circuit inside the probe.

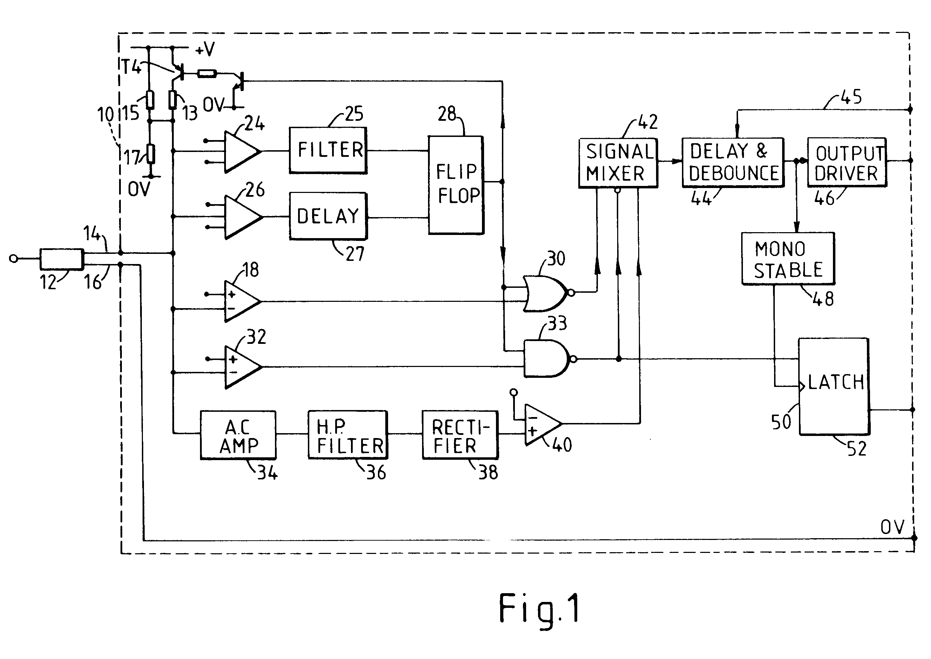

Referring firstly to Fig 1, a signal processing circuit 10 is connected to a probe 12 of the type described in the above co-pending applications. As described in those applications, the probe 12 has both piezo-electric and switching sensors and has only a two wire connection to transmit the signals from the two sensors, namely a signal line 14 and a return line 16. This enables the probe 12 to be interchangeable with more conventional probes having only one type of sensor, e.g. a switching sensor, such as described in US Patent No. 4,153,998.

The circuit 10 of Fig 1 is an interface which is intended to be attachable to either the probe 12 or to such a more conventional switching probe. It therefore includes circuitry to determine what type of probe has been attached, and to provide an appropriate power supply.

When a conventional switching probe is connected, a window comparator 24 detects this from the fact that the conventional probe either will be an effective short circuit to ground (if seated in its rest position) giving a very low voltage input to the comparator, or will be an open circuit (if unseated e.g. by contact with a workpiece), giving a very high voltage input. The window comparator 24 resets a flip-flop 28 if input voltage outside the range 4V to 14V are detected on the line 14, corresponding to these two conditions (based upon a 15V supply).

This ensures that a transistor T4 is turned off, and the probe is then supplied from a voltage divider formed of resistors 15,17, giving about 12V when the conventional probe is unseated, and less than 1.5V when it is seated. A filter 25 prevents the flip-flop being reset by transients outside the range 4V to 14V, e.g. from the piezo sensor of the probe 12.

As will be seen below, the probe 12 having the piezo sensor produces a signal of about 2.5V on the line 14 when supplied from the voltage divider 15,17. Should such a probe 12 be connected in place of the conventional probe, this is detected by a window comparator 26 which reacts to voltages within the range 1.5V to 4V to set the flip-flop 28 and turn on the transistor T4. The probe 12 is now supplied through a resistor 13, which has a much lower value than the resistor 15, so that the probe 12 gives voltages well within the range 4V to 14V on the line 14. A delay circuit 27 ensures that the flip-flop 28 does not get set during the small time taken for the output of a conventional probe to pass between 1.5V and 4V when it switches between low and high levels.

It will be appreciated that the voltage levels quoted above are merely examples to illustrate the principle of operation.

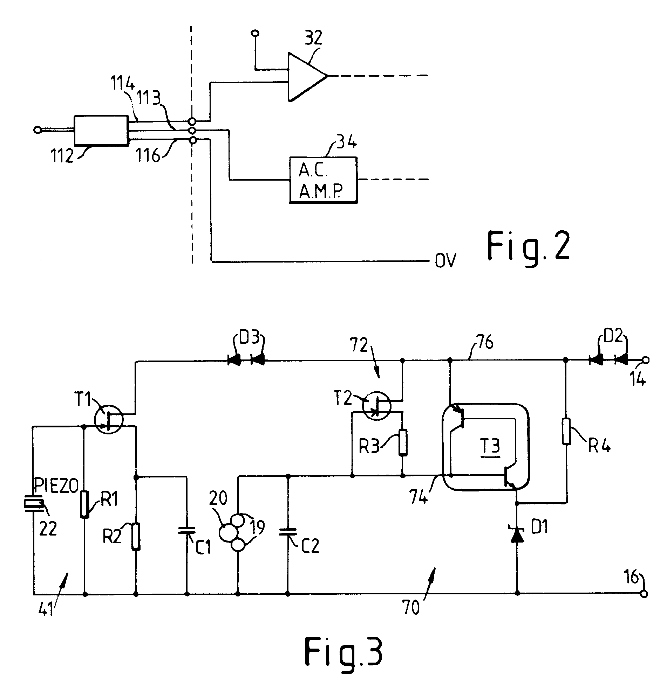

Referring to Fig 3, which shows the circuit of the probe 12 as described in the co-pending application EP-A-0242710 the signal from the piezo electric sensor 22 is amplified by an amplifier 41, consisting of a field effect transistor T1, resistors R1,R2 and a capacitor C1. This amplifier is provided in parallel with a detection circuit 70 for detecting the opening of the seat elements 19,20 of the switching sensor. Although Fig 3 shows only one set of seat elements 19,20, there are in fact three such sets, in series.

The circuit 70 includes a constant current source 72, made up of a field effect transistor T2 and a resistor R3, which normally feeds a constant current through the seat elements 19,20. When the seat elements 19,20 open, however, as a result of contact with a workpiece, this constant current starts to charge a capacitor C2 placed in parallel with the seat elements. The result is a rising ramp voltage at the gate input 74 of a silicon controlled rectifier (SCR) T3. The trigger threshold voltage of the SCR T3 is set by a Zener diode D1 and resistor R4. Assuming the elements 19,20 to be fully opened, the ramp voltage across capacitor C2 will continue to rise until the voltage on the electrode 74 reaches this trigger threshold. In the event of contact bounce, however, the effective reclosing of the seat elements 19,20 during the contact bounce will tend to discharge the capacitor C2. Consequently the trigger threshold will not be reached until the elements 19,20 are fully opened, and the SCR does not react to the contact bounce. This ensures that the probe 12 does not produce contact bounce which might confuse the interface 10 if it is at a similar frequency to the signal from the piezo sensor 22.

When the ramp voltage across capacitor C2 reaches the trigger threshold, the SCR T3 quickly becomes fully conductive, pulling the voltage on a connecting line 76 down to around one volt above the threshold voltage of the Zener diode D1. As mentioned previously, the line 14 to the probe is supplied through a low value resistor 13 in the interface. When the line 76 is pulled down by the SCR T3, the voltage across this resistor 13 in the interface increases, and is easily detected as discussed below. (However, it should be noted that the SCR T3 has the effect of inverting the signal from the seat elements 19,20, compared with a conventional probe).

When the seat elements 19,20 reclose, the gate electrode 74 of the SCR T3 is shorted to the earth line 16. This causes the SCR to turn off, so that the voltage on line 76 rapidly rises again, signalling that the probe has reseated satisfactorily and is ready for the next measurement.

The AC signal from the piezo sensor 22, coming via the amplifier 41, is also fed along the line 76 to the signal line 14, and is detectable in the interface as discussed below.

A diode pair D2 is provided in the line 76, in series with the detection circuit 70, and a further diode pair D3 is in series with the amplifier 41. These diode pairs adjust the DC levels of these signals to make the present probe 12 easier to distinguish from other, conventional probes which might be connected to the interface. Additionally, the diode pairs prevent accidental current reversal. Moreover, when the transistor T4 in the interface 10 is turned off, the resistor 15 is unable to supply the full quiescent current of the amplifier 41, so that most of the supply voltage is dropped across the resistor 15 and the diodes D2,D3 set the 2.5V seen on the line 14 in this condition.

One further advantage of the circuit of Fig 3 is that the charging of the capacitor C2 to the trigger voltage of the SCR T3 will always take a certain minimum length of time (typically ½ to 3 milliseconds). This aids the operation of the circuit described below which gives an indication in the case where the initial contact with the workpiece is so soft that the AC signal from the piezo sensor 22 is not detected, so that the interface reacts only to the opening of the seat elements 19,20. The circuit makes use of the time delay between the piezo signal and the signal from the seats. The inherent time delay caused by the charging of the capacitor C2 will ensure that there is always a certain minimum delay between the two signals, which is easily detected. However, this is not essential, and the circuit below could simply detect the natural time delay between the piezo signal and the seats signal, if desired.

Referring again to Fig 1, a comparator 18 is provided in the interface 10 to give a low level trigger signal in response to opening of the switch contacts of the conventional switching probe, when one is attached. Opening of these contacts causes the input of the comparator 18 to rise from a very low level to a higher level, as noted above, and the threshold of the comparator 18 is accordingly set at a suitably low level to give the trigger signal as soon as possible. The output of the comparator 18 is fed through a NOR gate 30 to a signal mixer 42 if the flip-flop 28 indicates that the conventional switching probe is attached. However, the gate 30 inhibits the output of the comparator 18 if the probe 12 is attached, since otherwise the comparator 18 would act on the mixer 42 to prevent reliable output from the trigger circuitry described below.

A comparator 32 also receives the input signal from the probe. Its threshold level is arranged to detect the switching of the switching sensor of the probe 12 (which switches between rather higher levels than the conventional switching probe because of its additional internal components). The output of the comparator 32 is taken to an inverting input of the signal mixer 42 via a NAND gate 33, which allows this output to be inhibited if the flip-flop 28 indicates that a conventional probe is connected.

In parallel with this, there is a circuit to detect the output of the piezo-electric sensor of the probe 12. This comprises an A.C. amplifier 34, followed by a high pass filter 36. The pass band of the filter 36 is selected to be compatible with the resonant frequency of the piezo-electric sensor, so that most of the electrical noise generated by that sensor in response to machine and other vibrations can be eliminated.

The output of the filter 36 is rectified by a precision rectifier 38. This ensures correct triggering of the circuit, irrespective of whether the signal produced by the piezo-electric sensor is positive-going or negative-going. Finally, the rectified signal is fed to a threshold detection comparator 40. The threshold level of this comparator is a low value selected to ensure reliable triggering in response to output signals from the piezo-electric sensor. The resulting signal is taken to the signal mixer 42.

The output of the mixer 42 obviously includes components due to both the piezo-electric and switching sensors of the probe 12, and is taken to a debounce circuit 44. If the piezo-electric signal has been so low that it is not detected, for example because the speed of contact between the probe and the workpiece has been very low, the debounce circuit 44 reacts to the switching signal from the comparator 32, and provides an output through a driver 46. Similarly, if a conventional switching probe has been attached, the circuit 44 debounces the output from the comparator 18. If the circuits 34-40 detect a piezo-electric signal from the probe 12, the circuit 44 will provide a clean output in response to this, and of course this will happen faster than the output of the switching sensor, giving a more accurate measurement indication. The circuit 44 may have an external input 45 to introduce a delay into the signal and only give an output if the probe is triggered for a certain length of time, corresponding to the delay. This is useful when the probe is being moved at a high speed between measurements, so that the probe is not sensitive to minor vibrations but can still give an emergency stop signal if it accidentally collides with something. It will be appreciated that this delay is inhibited during normal measurement operations. If desired, the input 45 may also be used to inhibit the piezo-electric signal from the comparator 40 during high speed movements.

It is often useful to know, during a normal measurement operation, whether the output signal has been triggered by the piezo-electric sensor or the switching sensor of the probe 12, for example since this gives an indication of the accuracy of the resulting measurement and can enable the computer control to act accordingly, e.g. by repeating the measurement. Such an indication can be provided on a flag line 52.

The output of the debounce circuit 44 is delayed by a monostable 48 and used to clock a latch 50. This clocks into the latch the output of the gate 33, corresponding to the state of the switching sensor of the probe 12 at the time. Of course, if the debounced output was caused by the switching sensor, and not by the piezo, the latch will produce an output on line 52 showing that the switching sensor was triggered at the end of the delay introduced by the monostable 48. Alternatively, if the debounced output was caused by the piezo sensor, the latch output will show that the switching sensor had not yet been triggered. The length of the monostable 48 delay is chosen so as to discriminate between the piezo signal and the signal from the switching sensor, given the existence of a certain minimum time interval between these two signals, as discussed above. The value of the monostable delay should be shorter than this minimum time interval, and should be longer than any remaining contact bounce from the switching sensor that is not removed by the circuit 70 within the probe 12. We have found 200 microseconds to be satisfactory. Of course. the monostable 48 could be omitted if the switching sensor signal is adequately debounced prior to the gate 33, reliance being placed simply on the signal propagation delays of the circuits 42,44 to ensure correctly timed clocking of the latch 50.

Other circuits may be used to produce the flag output 52 by discrimating the time delay between the piezo and the switching sensor signals, if desired. For example, the monostable 48 may be triggered by the output of the piezo signal detector 40, with the latch 50 latching in the output of the switching signal detector 32 as above. This discriminates the time delay in a similar manner to that described above, but relies on the switching sensor signal also being detected by the circuits 34,40, should the piezo signal not be detected.

As mentioned, the circuit of Fig 1 is intended to receive the two-wire input from the probe 12 of the co-pending applications, or alternatively that of a conventional switching probe. Of course, where this dual capability is not required, an interface simply for the probe 12 can be provided by omitting the comparator 18, gate 30, comparators 24,26, flip-flop 28, transistor T4 and associated components. Instead of being a separate interface, such a circuit could if desired be built into or onto the probe 12 itself.

Furthermore, since the comparator 40 will react to the switching sensor signal as well as the piezo-electric signal, the comparator 32 (and mixer 42) could be omitted. However, this is not normally preferred, because the comparator 32 is D.C. coupled and therefore gives a continuous indication of whether the switching sensor is seated or unseated. Being A.C. coupled, the circuits 34-40 cannot do this.

Where interchangeability with two-wire probes is not required, the probe may be provided with three (or more) connections to the circuit. This is illustrated in Fig 2, in which a probe 112 has a line 114 from the switching sensor, a line 113 from the piezo-electric sensor, and a return line 116. The line 114 is taken directly to the comparator 32, and the line 113 is taken directly to the amplifier 34. The rest of the circuits 36-46 (and optionally 48,50) are the same as in Fig 1.

If desired, the signal mixer 42 can be omitted from the embodiments of either Fig. 1 or Fig. 3. The detected trigger signals from the piezo sensor and from the switching sensor are then taken separately to the apparatus via respective outputs from the interface. A further output 52 is provided to the apparatus from a means for discriminating the first to occur of the two detected trigger signals. This indicates to the apparatus whether the piezo signal occurred before or after the switching sensor signal, and therefore whether the piezo signal is a reliable, accurate indication of workpiece contact.

It will be appreciated that circuits analogous to those described above can be of use with other probes having two sensors. For example, the piezo-electric sensor may be replaced by a capacitative, inductive or piezo-resistive sensor; or if a piezo-electric sensor is used then it need not be in the physical configuration described in co-pending applications.

## Claims

1. A circuit (10) for processing a trigger signal from a workpiece position-sensing probe (12) having first and second sensing means (22;19,20) for producing said trigger signal, the circuit comprising:
first detecting means (34-40) for detecting a signal produced by the first sensing means (22), giving a first detection signal;
second detecting means (32) for detecting a signal produced by the second sensing means (19,20), giving a second detection signal;
means (42) for producing at least one output trigger signal in response to said detection signals; and
means for discriminating the first to occur of said first and second detection signals, and providing a further output accordingly, comprising means (48,50) for discriminating a time delay between the detection signals.

2. A circuit according to Claim 1, wherein said time delay is discriminated by means (50) for latching the second detection signal upon production of the output trigger signal.

3. A circuit according to Claim 2, including means (48) for receiving the output trigger signal and producing a signal therefrom which is delayed by a time value which is shorter than said time delay between the detection signals, and causing the latching means (50) to latch the second detection signal upon production of the delayed signal.

4. A circuit according to any one of the preceding claims, having only two terminals (14,16) for connection to the probe, one of the terminals (14) being connected to both of the detecting means.

## Patentansprüche

1. Schaltung (10) zum Bearbeiten eines Triggersignals von einer Werkstückpositions-Erfassungssonde (12) mit ersten und zweiten Sensormittel (22; 19, 20) zur Erzeugung des Triggersignals, wobei die Schaltung umfaßt:
erstes Erfassungsmittel (30-40) zum Erfassen eines durch das erste Sensormittel (22) erzeugten Signals, wodurch ein erstes Erfassungssignal entsteht;
zweites Erfassungsmittel (32) zum Erfassen eines durch das zweite Sensormittel (19, 20) erzeugten Signals, wodurch ein zweites Erfassungssignal entsteht;
Mittel (42) zum Erzeugen mindestens eines Ausgangs-Triggersignals in Reaktion auf die Erfassungssignale; und
Mittel zum Erkennen des zuerst auftretenden der ersten und zweiten Erfassungssignale und zum Schaffen eines entsprechenden weiteren Ausgangssignals, mit Mitteln (48, 50) zum Erkennen einer Zeitverzögerung zwischen den Erfassungssignalen.

2. Schaltung nach Anspruch 1, bei der die Zeitverzögerung erkannt wird durch Mittel (50) zum Zwischenspeichern des zweiten Erfassungssignals auf Erzeugung des Ausgangs-Triggersignals hin.

3. Schaltung nach Anspruch 2 mit Mitteln (48) zum Empfangen des Ausgangs-Triggersignals und zum Erzeugen eines Signals aus diesem, das mit einem Zeitwert verzögert ist, der kürzer als die Zeitverzögerung zwischen den Erfassungssignalen ist, und um das Zwischenspeichermittel (50) das zweite Erfassungssignal auf Erzeugung des verzögerten Signals hin zwischenspeichern zu lassen.

4. Schaltung nach einem der vorangehenden Ansprüche mit nur zwei Klemmen (14, 16) zur Verbindung mit der Sonde, wobei eine Klemme (14) mit beiden Erfassungsmitteln verbunden ist.

## Revendications

1. Un circuit (10) pour le traitement d'un signal de déclenchement provenant d'un capteur (12) de palpage de position d'une pièce muni
d'un premier et d'un second moyen de palpage (22;19;20) pour produire ledit signal de déclenchement, le circuit comprenant :
premier moyen de détection (34-40) pour la détection d'un signal produit par le premier moyen de palpage (22) donnant un premier signal de détection ;
second moyen de détection (32) pour la détection d'un signal produit par le second moyen de palpage (19,20) donnant un second signal de détection ;
moyen (42) de production d'au moins un signal de déclenchement de sortie en réponse auxdits signaux de détection et
moyen de discrimination du premier signal produit entre les deux dits premier et second signaux et production d'une autre sortie à cet effet comprenant les moyens (48,50) de discrimination d'un délai entre les signaux de détection.

2. Un circuit conforme à la définition 1 sur lequel ledit délai est discriminé par un moyen (50) de verrouillage du second signal de détection sur production du signal de déclenchement de sortie.

3. Un circuit conforme à la définition 2 comprenant un moyen (48) de réception du signal de déclenchement de sortie et produisant en conséquence un signal qui est retardé d'une durée inférieure audit délai entre les sigmaux de détection et entraînant l'action du moyen (50) de verrouillage pour verrouiller le second signal de détection sur production du signal retardé.

4. Un circuit conforme à l'une quelconque des définitions précédentes, muni seulement de deux bornes (14,16) pour le raccordement au capteur,
l'une des bornes (14) étant raccordée aux deux moyens de détection.
